(19) Europäisches Patentamt / European Patent Office / Office européen des brevets

(11) **EP 1 943 570 B1**

(12) **EUROPÄISCHE PATENTSCHRIFT**

(45) Veröffentlichungstag und Bekanntmachung des Hinweises auf die Patenterteilung:
**01.06.2016 Patentblatt 2016/22**

(21) Anmeldenummer: **06806642.2**

(22) Anmeldetag: **31.10.2006**

(51) Int Cl.:
*G05B 19/042* (2006.01)   *H04L 12/417* (2006.01)
*H04L 12/64* (2006.01)

(86) Internationale Anmeldenummer:
**PCT/EP2006/010477**

(87) Internationale Veröffentlichungsnummer:
**WO 2007/051595 (10.05.2007 Gazette 2007/19)**

(54) **VERFAHREN SOWIE SYSTEM ZUR ÜBERTRAGUNG VON ZYKLISCHEN UND AZYKLISCHEN DATEN**

METHOD AND SYSTEM FOR THE TRANSMISSION OF CYCLIC AND ACYCLIC DATA

PROCEDE ET SYSTEME DE TRANSMISSION DE DONNEES CYCLIQUES ET ACYCLIQUES

(84) Benannte Vertragsstaaten:
**FR IT**

(30) Priorität: **04.11.2005 DE 102005053103**

(43) Veröffentlichungstag der Anmeldung:
**16.07.2008 Patentblatt 2008/29**

(73) Patentinhaber: **Phoenix Contact GmbH & Co. KG**
**32825 Blomberg (DE)**

(72) Erfinder: **KORREK, Andre**
**37696 Marienmünster (DE)**

(74) Vertreter: **Bill, Burkart Hartmut**
**Blumbach - Zinngrebe**
**Patentanwälte**
**Elisabethenstrasse 11**
**64283 Darmstadt (DE)**

(56) Entgegenhaltungen:
WO-A-2004/030297   DE-A1- 4 408 488
DE-A1- 10 223 966   US-A1- 5 327 428
US-A1- 6 144 658

- CENA G ET AL: "STANDARD FIELD BUS NETWORKS FOR INDUSTRIAL APPLICATIONS" COMPUTER STANDARDS AND INTERFACES, ELSEVIER SEQUOIA. LAUSANNE, CH, Bd. 17, Nr. 2, 15. Januar 1995 (1995-01-15), Seiten 155-167, XP000484515 ISSN: 0920-5489
- DECOTIGNIE J D ET AL: "PRODUCER-DISTRIBUTOR-CONSUMER MODEL ON CONTROLLER AREA NETWORK" PROCEEDINGS OF THE IFAC/IFIC WORKSHOP, REAL TIME PROGRAMMING, OXFORD, GB, 6. November 1995 (1995-11-06), Seiten 35-42, XP002074139

**Beschreibung**

Die Erfindung betrifft ein Verfahren sowie ein System zur Übertragung von zyklischen und azyklischen Daten über einen Übertragungskanal unter Berücksichtigung der Echtzeitfähigkeit.

Ein industrielles, bei Datenübertragungssystemen eingesetztes Kommunikationssystem, das eine Vielzahl von Feldgeräten wie Messfühler (Sensoren), Stellglieder und/oder Antriebe (Aktoren) mit einem Steuerungsgerät verbindet, ist bekanntermaßen ein Feldbus. Am Markt sind eine Vielzahl unterschiedlicher Feldbussysteme mit unterschiedlichen Eigenschaften etabliert und weitgehend weltweit standardisiert.

Topologisch teilt man die zur Zeit marktrelevanten Feldbussysteme im Wesentlichen in zwei Gruppen auf, einerseits in Systeme mit einer Linienstruktur einschließlich Strang-, oder Baumstruktur, wie zum Beispiel Profibus, CAN oder Ethernet und andererseits in Systeme mit einer Ringstruktur, wie beispielsweise Interbus.

Systeme mit Ringstruktur zeichnen sich herkömmlicherweise besonders durch eine hohe Protokolleffizienz aus, welche sich in einer hohen Nettodatenrate bei geringer Übertragungsfrequenz niederschlägt. Durch die Ringtopologie wird die synchrone Datenübernahme beziehungsweise Datenübergabe aller Teilnehmer impliziert. Zu übertragende Information wird somit von Teilnehmer zu Teilnehmer weitergeleitet, bis sie den jeweils bestimmten Teilnehmer erreicht. Weitere Vorteile sind die sehr guten Diagnoseeigenschaften bezüglich der Übertragungsstrecke und, da es sich bei den Übertragungsstrecken um Peer-to-Peer-Verbindungen handelt und somit im Gegensatz zu einer Client-Server- oder Master-Slave-Verbindung eine Kommunikation unter Gleichberechtigten erfolgt, der weitgehende Entfall einer Vergabe von Geräteadressen und Terminierungen.

Im Gegensatz hierzu sind bei einer auf einer Linienstruktur basierten Topologie die Feldbussysteme in der Regel Hot-Plug-fähig, das heißt ein An- und Abkoppeln von einzelnen Teilnehmern bei laufendem Busbetrieb ist ohne große Probleme möglich. Ferner können Prozessdaten und azyklische Daten einschließlich Gerätediagnosedaten situationsabhängig in nahezu beliebigem Umfang übertragen werden. Diese Topologien basieren im Wesentlichen auf einer Client-Server- oder Master-Slave-Kommunikation.

Im allgemeinen kann jedoch festgehalten werden, dass mit die einer Ringstruktur verbundenen Vorteile den Nachteilen einer Linienstruktur entsprechen und umgekehrt. Darüber hinaus ist insbesondere aufgrund der heute hohen Komplexität und Übertragungsgeschwindigkeiten, die derzeit gängige beziehungsweise marktrelevante Bussysteme besitzen, eine Busankopplung häufig nur.noch durch spezielle und teure Protokollchips oder µController realisierbar.

Die Schrift "DP-Ethernet: the Profibus DP protocol implemented on Ethernet" (Vitturi S.), veröffentlicht am 20.06.2003 in "COMPUTER COMMUNICATIONS", - ELSEVIER SCIENCE PUBLISHERS BV; AMSTERDAM, NL, VOL - 26, NR - 10, Seiten 1095 - 1104, doi: 10.1016/S0140-3664(02)00241-4, offenbart eine gleichbleibende äußere Telegrammstruktur zur Übertragung von zyklischen und azyklischen Daten.

Die Druckschrift "STANDARD FIELD BUS NETWORKS FOR INDUSTRIAL APPLICATIONS" (CENA G ET AL), COMPUTER STANDARDS AND INTERFACES, ELSEVIER SEQUOIA, LAUSANNE, CH, Bd. 17, Nr. 2, 15. Januar 1995 (1995-01-15), Seiten 155-167, XP000484515, ISSN: 0920-5489, offenbart ein Datenübertragungsverfahren von zyklischen und azyklischen Daten, wobei redundante Daten nicht übertragen werden.

Eine Aufgabe der Erfindung ist es, einen Weg zur Übertragung von Daten über einen Übertragungskanal aufzuzeigen, welcher aus einer Ringstruktur und einer Linienstruktur bisher resultierenden Nachteilen effektiv entgegenwirkt und Vorteile der einen Topologiegruppe mit Vorteilen der anderen Topologiegruppe kombiniert, wobei insbesondere sowohl eine Hot-Plug-Fähigkeit und situationsabhängige Übertragung von Prozessdaten und azyklischen Daten einschließlich Diagnosedaten als auch ein geringer Protokoll-Overhead und eine synchrone Datenübernahme und Datenübergabe von Prozessdaten an alle angeschlossenen Teilnehmer gewährleistet werden soll.

Die erfindungsgemäße Lösung ist durch ein Verfahren gemäß Anspruch 1 sowie ein Übertragungssystem gemäß Anspruch 15 gegeben.

Vorteilhafte und/oder bevorzugte Ausführungsformen und Weiterbildungen sind Gegenstand der jeweiligen Unteransprüche.

Erfindungsgemäß ist somit vorgesehen, ein auf einem Protokoll zur zyklischen Datenübertragung über einen Übertragungskanal basierendes Verfahren zur Datenübertragung, mit einer gleichbleibenden äußeren Telegrammstruktur, derart weiterzubilden, dass die in einem bevorstehenden Zyklus zyklisch zu übertragende Daten gegenüber entsprechenden Daten eines vorhergehenden Zyklusses auf Vorliegen eines neuen Informationsgehalts überprüft werden und bei Erkennen eines bevorstehenden Übertragungszyklus, in welchem eigentlich nur Daten ohne neuen Informationsgehalt übertragen werden würden, azyklische Daten anstelle dieser zyklisch zu übertragenden Daten ohne neuen Informationsgehalt in den für diese zyklisch zu übertragenden Daten vorgesehenen Datenbereich in der Telegrammstruktur eingefügt werden.

Hierdurch bleibt die Äquidistanz der Abtastung selbst sowie die Deterministik bei der Übertragung von Prozessdaten, welche wichtige Kriterien sind, insbesondere für Steueranwendungen, erhalten und der Nutzdatendurchsatz wird dadurch nicht geschmälert.

Zur Durchführung des erfindungsgemäßen Verfahrens schlägt die Erfindung insbesondere ein Übertragungssystem vor, welches zum Senden und Empfangen von Daten eine gemeinsame Datenleitung zwischen einem Master und wenigstens einem Slaveteilnehmer umfasst. Eine Vielzahl von angeschlossenen Slaveteilnehmern können hierbei eine Teilnehmerstation bilden, mit der der Master über die Datenleitung verbunden ist. Das Datenübertragungssystem umfasst ferner ein anwendungsspezifisches Protokoll, basierend auf welchem in zyklischen Zeitabständen Daten zwischen dem Master und den Slaves zum Einschreiben von Daten in den Slaves mit einer gleichbleibenden Telegrammstruktur übertragen werden und Daten zwischen den Slaves und dem Master ausgetauscht werden, um Daten aus den Slaves auszulesen. Der Master besitzt eine zugeordnete Prüfinstanz zur Überprüfung der für eine bevorstehende zyklische Übertragung vorgesehenen Daten auf Vorliegen eines neuen Informationsgehalts in einer Speichereinheit abgelegten, während einer vorangegangenen zyklischen Übertragung bereits zyklisch übertragenen Daten sowie eine mit der Prüfinstanz gekoppelte Entscheidungsinstanz zum Entscheiden, ob zyklische Daten ohne neuen Informationsgehalt vorliegen und wenn ja, welche azyklischen Daten in den für diese zyklisch zu übertragenden Daten vorgesehenen Datenbereich, in welchem eigentlich nur Daten ohne neuen Informationsgehalt übertragen werden würden, in der Telegrammstruktur einzufügen sind.

Zweckmäßigerweise werden innerhalb jedes Übertragungszyklusses während jeweils eines ersten Datenzyklusses Prozesseingangsdaten von der Mastereinheit aus Slaveeinheiten ausgelesen und während eines jeweils darauffolgenden zweiten Datenzyklusses Prozessausgangsdaten oder die azyklischen Daten übertragen.

Insbesondere ist vorgesehen, dass azyklische Daten nicht nur zur Übertragung von der Mastereinheit zu Slaveeinheiten eingefügt werden können, sondern auch zur Übertragung von Slaveeinheiten zur Mastereinheit.

In bevorzugter Weiterbildung ist ferner vorgesehen, dass zyklische Daten nicht nur zur Übertragung von der Mastereinheit zu Slaveeinheiten eingefügt werden sondern auch zur Übertragung zwischen einzelnen Slaveeinheiten und/oder von Slaveeinheiten zur Mastereinheit:

Hierzu ist vorgesehen, dass alle Teilnehmereinheiten während eines Datenzyklusses übertragende Informationen mitlesen.

Zur zeitnahen Fehlererkennung ist ferner vorgesehen, dass die Teilnehmereinheiten über jeweils empfangene oder mitgelesene Daten eine Prüf- oder Checksumme bilden und diese mit einer an den empfangenen oder mitgelesenen Daten angehängten Prüf- oder Checksumme vergleichen.

In bevorzugter Weiterbildung ist somit vorgesehen, dass bei Erkennen auf einen Fehler eine Fehlermeldung rückübertragen wird.

In praktischer Weise sieht die Erfindung vor, jede Datenübertragung während eines Datenzyklusses mit der Übertragung einer Adresse gefolgt von einem Funktionscode einzuleiten. Den Abschluss bildet zweckmäßigerweise ein CRC, der vom Master generiert wird.

Die Erfindung sieht insbesondere vor, als azyklische Daten Anfragedaten, Antwortdaten oder Diagnosedaten zu übertragen.

Zweckmäßig ist es überdies, wenn ein jeweiliger Zeitpunkt zu dem ein oder mehrere Slaveteilnehmer azyklische Daten übertragen sollen durch die Mastereinheit vorgegeben wird.

Hierzu ist es vorteilhaft, wenn zur Vorgabe von solchen jeweiligen Zeitpunkten während eines vorangehenden Datenzyklusses, innerhalb welchem azyklische Daten übertragen werden von der Mastereinheit ein entsprechender Funktionscode mitübertragen wird.

Zur Erhöhung der Fehlersicherheit, insbesondere bei sicherheitskritischen Prozessen, ist es ferner vorgesehen, dass zumindest nach Übertragung einer vorbestimmten aufeinanderfolgenden maximalen Anzahl von azyklische Daten umfassenden Datenzykleh ein normaler, zyklische Daten umfassender Datenzyklus durchgeführt wird.

Alternativ oder ergänzend ist ferner bevorzugt vorgesehen, dass unter Ansprechen auf keinen fehlerfreien zyklischen Datenaustausch innerhalb eines vorgegebenen Zeitraums auf einen Fehler erkannt und eine vorparametrierte Fehlerbehandlung eingeleitet wird.

Die Erfindung nutzt für die Übertragung von Daten während eines jeden Datenzyklusses in vorteilhafter Weise die gleichbleibende äußere Struktur eines Telegramms, welches aus einer Adresse, einem Funktionscode, einer bestimmten Anzahl von Nutzdaten und einer Prüf- oder Checksumme aufgebaut wird, wobei zweckmäßigerweise zwischen zwei aufeinanderfolgenden Telegrammen eine Ruhezeit vorgesehen wird, innerhalb welcher keine Daten übertragen werden.

Die Erfindung schlägt ferner vor, eine Wiederholung von während eines Datenzyklusses fehlerhaft übertragenen Daten erst in einem folgenden entsprechenden Datenzyklus durchzuführen.

Eine besonders zweckmäßige Weiterbildung der Erfindung sieht ferner vor, dass bei Erkennen einer während eines Datenzyklusses zur vorgesehenen Datenübertragung nicht zur Verfügung stehenden Slaveeinheit, durch die Mastereinheit ein Platzhalter in das entsprechende, der Slaveeinheit zugewiesene Zeitfenster eingebettet wird.

Während eines Datenzyklusses zur Auswertung zu übertragene Diagnosedaten werden bevorzugt durch einen Sendeaufruf der Mastereinheit eingeleitet, wobei während eines solchen Diagnose-Zyklus höher priorisierte Information vorrangig übertragen wird.

Diese und weitere Merkmale sowie damit einhergehende Vorteile der Erfindung ergeben sich aus der nachfolgenden beispielhaften Beschreibung bevorzugter Ausführungsformen unter Bezugnahme auf die beigefügten Zeichnungen.

In den Figuren zeigen

Fig. 1 mögliche Buszugriffe innerhalb für das erfindungsgemäße Verfahren bevorzugt verwendeten Buszyklen,
Fig. 2 einen beispielhaften Rahmenaufbau für ein gemäß der Erfindung verwendbares Telegramm,
Fig. 3 einen Telegrammaufbau während eines PD-Write-Zugriffs-Zyklusses,
Fig. 4 einen Telegrammaufbau während eines PD-Read-Zugriffs-Zyklus,
Fig. 5 einen Telegrammaufbau während eines azyklisch eingebetteten Diagnose-Zugriffs,
Fig. 6 eine mögliche Topologie des erfindungsgemäßen Übertragungssystems,
Fig. 7 eine Integration des erfindungsgemäßen Übertragungssystems in eine bestehende Bustopologie.

Das erfindungsgemäße Verfahren und Übertragungssystem basiert auf einer gemeinsamen Datenleitung zum Senden und Empfangen von Daten, insbesondere von Prozessdaten. Beispielsweise basierend auf einem aus der Automobiltechnik bekannten LIN-Bus arbeitet ein derartiges gattungsbildendes Übertragungssystem, bei welchem während bestimmter Datenzyklen durch einen Master protokollspezifische Daten aus an einer Feldstation angeschlossenen Feldgeräten ausgelesen und während jeweils nachfolgender Datenzyklen in solche hineingeschrieben werden können, mit etwa 19,2 bis 38 kbd.

Die Erfindung macht sich zu eigen, dass für viele Applikationen die Deterministik, also die Vorbestimmtheit und Unabänderlichkeit bei der Übertragung von Prozessdaten wichtiger ist als die eigentliche Übertragungsgeschwindigkeit selbst.

Bei der vorliegenden Erfindung wird diese Deterministik durch die Buszykluszeit des Übertragungssystems bestimmt, welche zweckmäßigerweise einstellbar ist und beispielsweise in einem Bereich zwischen 10 und 100 ms liegt. Für eine Übertragung von 16 Prozessdatenwerten à 16 Bit pro Zyklus ist folglich eine Defaulteinstellung von z.B. 25 ms ausreichend.

Beim Verfahren nach der Erfindung erfolgt somit die Übertragung von Prözesseingangs- und -ausgangsdaten grundsätzlich auch in einem festen Intervall, jeweils um die halbe Buszykluszeit versetzt.

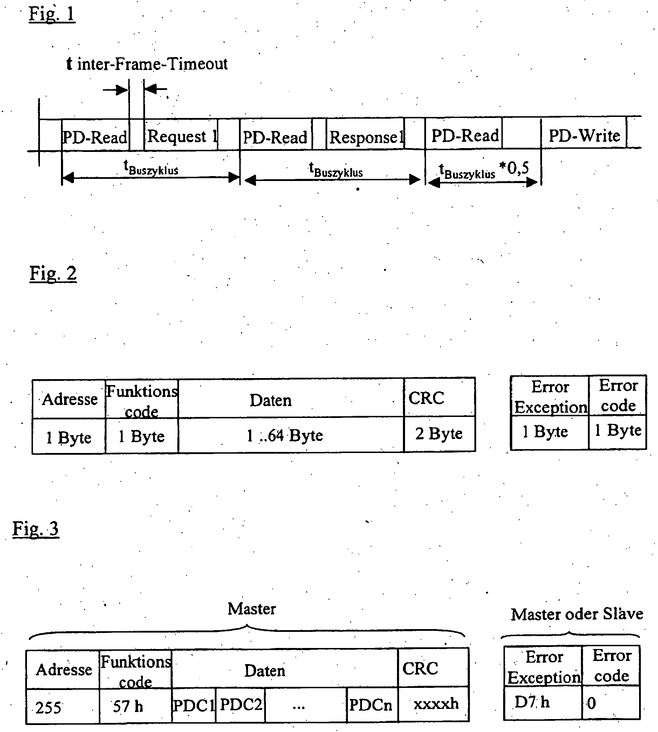

Unter Bezugnahme auf Fig. 1 wird für die nachfolgende Beschreibung zunächst davon ausgegangen, dass das Übertragungsprotokoll für die zyklische Übertragung von Prozesseingangs- und -ausgangsdaten zwei unterschiedliche Dienste, nachfolgend als PD-Read und PD-Write bezeichnet, verwendet. Ein Buszyklus umfasst folglich einen auf einem PD-Read-Dienst basierten Datenzyklus und einen nachfolgenden Datenzyklus, der auf einem PD-Write-Dienst basiert.

Bei der Übertragung von Prozessausgangsdaten sendet ein Master des Übertragungssystems nach der Erfindung einer mit diesem.verbundenen Station somit beim PD-Write-Dienst grundsätzlich alle Daten für die an der Station angeschlossenen Feldgeräte und ermittelt zweckmäßigerweise anschließend einen CRC (Cyclic Redundancy Check), den er auch überträgt. Zweckmäßigerweise ist das Übertragungssystem derart ausgebildet, dass alle angeschlossenen Feldgeräte alle so übertragenden Informationen mitlesen und bevorzugt ebenfalls einen CRC bilden, den sie mit dem empfangenen CRC des Masters vergleichen, so dass im Fehlerfall eine Fehlermeldung generiert und beispielsweise die gesamte Station oder einzelne Feldgeräte in einen sicheren Zustand gefahren werden.

Bei der Übertragung der Prozesseingangsdaten sendet der Master bei einem PD-Read-Dienst z.B. zunächst eine Broadcast-Adresse gefolgt von einem Funktionscode. Die an der Station angeschalteten Feldgeräte legen daraufhin ihre Daten, also insbesondere ihre Prozesseingangsdaten Bit für Bit auf die Datenleitung in jeweils dafür vorgesehene Byte-Räume. In bevorzugter Ausführung sind die angeschlossenen Feldgeräte wiederum in der Lage durch Mithören auf der Datenleitung alle Daten zu erkennen und hierfür wiederum einen CRC zu berechnen.

Die Erfindung nutzt nunmehr ferner die Tatsache aus, dass die Prozessausgangsdaten in der Regel nicht immer übertragen werden müssen, das heißt insbesondere dann, wenn die zur Übertragung bevorstehenden Prozessausgangsdaten keinerlei Änderung erfahren haben und die an einer Feldstation angeschlossenen Feldgeräte bereits im Besitz der aktuellen Prozessausgangsdaten sind. Der Master umfasst hierzu eine Prüfinstanz zum Feststellen, ob von einem auf den nächsten Zyklus ein oder kein Unterschied in den zu übertragenden Daten besteht. Stellt die Prüfinstanz hierbei fest, dass kein Unterschied besteht und ist im vorangegangenen Zyklus eine Fehlermeldung nicht erfolgt, entscheidet eine Entscheidungsinstanz des Masters, ob in dem bevorstehenden Zeitschlitz anstelle der eigentlich übertragenden redundanten Daten azyklische Daten wie beispielsweise eine Anfrage, eine Antwort oder Diagnosedaten, übertragen werden sollen.

Bei dem in Fig. 1 dargestellten Beispiel überträgt der Master somit gemäß der Erfindung innerhalb eines Buszyklusses nach Abschluss eines PD-Read-Dienstes im eigentlich für einen PD-Write-Dienst vorgesehenen Zeitschlitz eine mit "Request 1" angezeigte Anfrage. Der Zeitpunkt zu dem der "Slave" hierauf eine bestimmte Antwort senden soll, bei Fig. 1 mit "Response 1" bezeichnet, wird durch den Master zweckmäßigerweise durch ein Bit eines Funktionscodes bestimmt. Gemäß Fig. 1 wird folglich eine Verzögerung der Response bis nach dem nächsten PD-Read-Dienst vorgegeben, also bis zum eigentlich für den nächsten PD-Write-Dienst vorgesehen Zeitschlitz, so dass die Deterministik weiterhin sichergestellt und darüber hinaus der Slave mehr Zeit für die Verarbeitung der Anfrage hat.

Insbesondere bei sicherheitskritischen Prozessen sieht die Erfindung bei Anwendung des erfindungsgemäßen Verfahrens darüber hinaus vor, dass das Aussetzen eines PD-Write-Zyklus eine maximale Anzahl von aufeinander folgenden Datenzyklen nicht überschreiten darf und andernfalls eine vorparametrierte Fehlerbehandlung, beispielsweise das Fahren der Feldgeräte in den sicheren Zustand eingeleitet wird. Das Aussetzen eines PD-Write-Zyklusses darf also beispielsweise maximal in 15 aufeinanderfolgenden Datenzyklen erfolgen und im 16. Zeitschlitz muss dann wieder ein PD-Write-Zugriff erfolgen. Alternativ oder ergänzend kann zur Erhöhung der Sicherheit voreingestellt sein, dass innerhalb eines vorgegebenen Zeitraums, beispielsweise von 1000 ms, wenigstens ein gültiger, also fehlerfreier zyklischer Datenaustausch erfolgt sein muss und ansonsten alle angeschlossenen Feldgeräte einen Fehler erkennen und die vorparametrierte Fehlerbehandlung einleitet.

Ein bevorzugter, jedoch grundsätzlich protokollabhängiger Rahmenaufbau für das erfindungsgemäße Verfahren während eines PD-Write-Zyklusses, eines PD-Read-Zyklusses oder eines azyklischen Datenzyklusses ist in Fig. 2 dargestellt. Die jeweilige Telegrammlänge umfasst hierbei 68 Zeichen und ist zweckmäßigerweise so ausgelegt, dass ein übermäßiger Speicherbedarf in den als Slaves angeschlossenen Feldgeräten nicht beansprucht werden muss.

Das Telegramm umfasst demgemäß eine Adresse von einem Byte, die einen bestimmten Teilnehmer oder im Falle einer Broadcast-Adresse alle Teilnehmer als Empfänger bestimmt. Anschließend folgt ein Funktionscode, im vorliegenden Fall ebenfalls ein Byte umfassend, der die beabsichtigte Funktion der nachfolgenden Nutzdaten definiert. Die eigentlichen Nutzdaten umfassen im vorliegenden. Beispielsfall 64 Byte gefolgt von einem 2-Byte-umfassenden CRC. Zwischen den einzelnen Zeichen eines solchen Telegramms darf während der Übertragung eine maximale Pause nicht überschritten werden, da ansonsten auf einen Fehler erkannt werden würde. Diese Pause ist z.B. mit 1 ms vorgegeben und wird auch als Inter-Charakter-Timeout bezeichnet. Zwischen zwei aufeinanderfolgenden Telegrammen ist darüber hinaus eine Ruhezeit (Inter-Frame-Timeout) (Fig. 1) vorgesehen, beispielsweise von 2 ms, damit die gegebenenfalls nötige Fehlerbehandlung korrekt vom Empfänger durchgeführt werden kann.

Eine Rückübertragung eines wie bei Fig. 2 dargestellten Error-Exception-Codes und eines Error-Codes, also der Mitteilung, dass ein Fehler erkannt worden ist und welcher Fehler erkannt worden ist, durch den Empfänger erfolgt bevorzugt nur bei Erkennen eines solchen Fehlers und beginnt zweckmäßigerweise zwischen einer und zwei Millisekunden nach dem vom Empfänger erhaltenen CRC des Senders.

Der vorstehend beschriebene bevorzugte jedoch lediglich beispielhafte Rahmenaufbau und das Zeitverhalten ist damit kompatibel zu anderen Protokollen, beispielsweise zum Modbus-Protokoll.

Im Gegensatz zu einem solchen Modbus-Protokoll ist jedoch der Funktionscode bei Anwendung der Erfindung zweckmäßigerweise auf die unteren sieben Bits des Funktionscode-Bytes beschränkt. Für einen azyklischen Dienst signalisiert der Master durch Setzen des höchstwertigen Bits dem oder den Slaves, dass er die Antwort auf eine Anfrage erst nach dem nächsten PD-Read-Zugriff erwartet, wie bei Fig. 1 dargestellt. Da dieses höchstwertige Bit jedoch nur zwischen den Protokoll-Stacks des Senders und Empfängers in den Datenstrom eingerührt wird, sind die Kommandos in der Schicht 7 des OSI-Schichtenmodells wiederum Modbus-kompatibel.

Die Übertragung von Datenwörtern (16 Bit) erfolgt beispielsweise im Big-Endian-Format, das heißt das High-Byte wird zuerst übertragene.

Wie vorstehend bereits aufgezeigt, basiert die Erfindung auf einem grundsätzlich zyklisch aufgebauten Datenaustausch, der in einem fest definierten Raster stattfinden und zweckmäßigerweise in den vorgenannten PD-Read- und den PD-Write-Zugriff beziehungsweise -Zyklus unterteilt ist, sodass mit dem PD-Write-Zugriff Daten vom Master zu den Slaves gesendet und mit dem PD-Read-Zugriff in die andere Richtung, also im Wesentlichen von den Slaves zum Master gesendet werden. Für die nachfolgende Beschreibung sei ferner darauf hingewiesen, dass ein jeweiliges Prozessdatum aus 16 Bit besteht und als Prozessdatenkanal (PDC) bezeichnet wird.

Der PD-Write-Zugriff kommt somit insbesondere zum Einsatz, wenn vom Master zyklische Informationen in eine Vielzahl von Feldgeräte umfassende Station übertragen werden sollen. Folglich verarbeiten in diesem Fall alle an der Station angeschlossenen Teilnehmer, also die Feldgeräte, die für sie bestimmten Daten (PDC's) zeitgleich und führen dadurch die gewünschten Aktionen auch nahezu synchron aus.

Ein derartiger PD-Write-Zugriff ist in Fig. 3 beispielhaft dargestellt. Stellt ein Teilnehmer, gegebenenfalls'auch der Master selbst, nach oder während der Übertragung einen Fehler fest, generiert er im Anschluss an die auf dem PD-Write-Dienst basierende Übertragung die Fehlerantwort, beispielsweise die in Fig. 3 abgebildete. Da bei Erkennen eines Fehlers diese Fehlerantwort rückübertragen wird und, wie vorstehend hingewiesen, die angeschlossenen Teilnehmer gemäß bevorzugter Ausführungsform alle Daten mitlesen, sieht die Erfindung vor, dass alle Teilnehmer unter Ansprechen auf eine mitgelesene Fehlerantwort die letztübertragenen Daten verwerfen, so dass die Daten aus dem letzten gültigen, also fehlerfreien Zyklus weiterhin Gültigkeit besitzen. Eine Wiederholung des Telegramms durch den Master erfolgt nicht sofort sondern erst im nächsten für einen PD-Write-Dienst reservierten Zeitschlitz.

Die Anzahl der zu übertragenden PDC's wird grundsätzlich durch die Masterkonfiguration festgelegt. Ist sie auf Null eingestellt, werden keine PD-Write-Zugriffe ausgeführt.

Im Gegensatz zum PD-Write-Dienst und entsprechendem Zugriff auf die Datenleitung ist der PD-Read-Zugriff nicht optional. Grundsätzlich dient er dazu, Daten von den Feldgeräten der Station zum überlagerten Steuerungssystem oder Master zu übertragen.

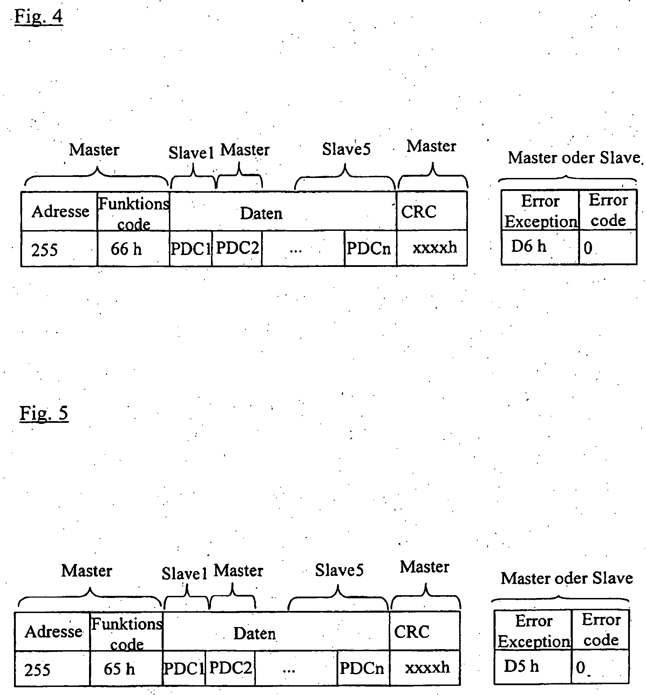

Erfindungsgemäß ist jedoch in Bezug auf den PD-Read-Dienst und den entsprechenden Zugriff auf die Datenleitung vorgesehen, dass hierüber Daten auch innerhalb der Station, und also im Wesentlichen zwischen den einzelnen Feldgeräten verteilt werden können. Ein beispielhafter Protokollrahmenaufbau während eines PD-Read-Zugriffes ist in Fig. 4 dargestellt. Für jeden der in Fig. 4 dargestellten PDC's existiert ein sogenannter "Produzent", der das Datenwort (16 Bit) zum richtigen Zeitpunkt auf den Bus ausgibt. Als Daten produzierende Einheiten sind erfindungsgemäß nicht nur die Slaves sondern auch der Master des Systems nach der Erfindung zulässig. Er kann nicht nur Daten eines überlagerten Systems veröffentlichen sondern auch eigene, beispielsweise digitale Eingangsdaten.

Eingeleitet wird jeder PD-Read-Zugriff durch den Master mit der Übertragung der entsprechenden Adresse und des Funktionscodes. Im Anschluss daran hat der Produzent des ersten PDC's beispielsweise 500 μs Zeit, seine Datenübertragung zu starten. Sollte die Übertragung nach 750 μs beispielsweise noch nicht begonnen haben, erkennt der Master, dass der Produzent nicht betriebsbereit beziehungsweise nicht vorhanden ist. Er generiert in diesem Fall einen Platzhalter für den entsprechenden PDC, indem er einen entsprechenden profilabhängigen Fehlercode einbettet. Die nachfolgenden Produzenten bemerken durch diese Fehlerbehandlung keinen Unterschied und beginnen ihre Übertragung im für sie vorgesehenen Zeitfenster. Sind alle PDC's eingelesen, generiert der Master eine Checksumme CRC. Alle Teilnehmer berechnen ebenfalls eine Checksumme und vergleichen sie mit der vom Master generierten. Erkennen sie einen Unterschied, wird z.B. die bei Fig. 4 dargestellte Fehlerantwort generiert und alle Teilnehmer verwerfen gemäß bevorzugter Ausführungsform, nach der alle Teilnehmer alle Daten mitlesen, die Daten dieses letzten Zykluses. Für die Generierung der Checksumme ist es ferner zweckmäßige, dass die Produzenten diese nicht mit den Daten, die sie vom Bus zurücklesen, sondern mit denen, die sie an den Bus übertragen durchführen, da nur so eine vollständige Überwachung gewährleistet ist.

Eine naheliegende Anwendung für einen solchen PD-Read-Zugriff ist beispielsweise die Visualisierung von Daten auf einem Display. Weitere Anwendungen umfassen in praktischer Weise unter anderem die Ausgabe eines Wirkleistungswertes eines Feldgerätes, welches beispielsweise ein elektronisches Lastrelais mit Motorantrieb (ELR-MM, Electronic Load Relay-Motor Management) umfasst, auf einer Analogausgabeklemme oder die Erweiterung eines ELR-MMs, um zusätzliche digitale Ein- und Ausgänge.

Der Aufbau der.einzelnen PDC's erfolgt bevorzugt nach folgendem Vorschlag. Wie bereits angesprochen umfasst ein PDC zweckmäßigerweise ein 16 Bit-Datenwort, welches zur Darstellung im Zweierkomplement erfolgt. Generische Konsumenten können somit durch eine definierte Beschreibung die Daten interpretieren, wobei die Abfrage der Beschreibung auch durch einen Dienst erfolgen kann. Inhalt einer solchen Beschreibung sind neben einem Profil auch die Skalierungsgrenzen des Prozessdatenwerts und ein symbolischer Name, der 16 Zeichen umfassen darf. Ein PDC ist somit z.B. gemäß

$$PDC = \begin{cases} 8080 & , wenn\, Messwert < Skalierung\, Low(SL) \\ 8001 & , wenn\, Messwert > Skalierung\, High(SH) \\ \dfrac{(Messwert - SL) * 65024}{SH - Sl} & , sonst \end{cases}$$

aufgebaut, wobei die Darstellung der Prozessdaten zur Einbindung des erfindungsgemäßen Übertragungssystems an einen Bus in einer entsprechend kompatiblen Form erfolgt, und die Skalierung der PDC's durch vorangegangene Gleichung erfolgt. Durch das Profil ist ferner spezifiziert, welchen Wert der Master sendet, wenn ein Teilnehmer nicht verfügbar ist.

In der nachfolgenden Tabelle ist eine Auflistung beispielhafter Profile, einer jeweiligen Beschreibung, sowie die jeweils zugeordnete Basiseinheit und das Fehlerwort wiedergegeben.

| Profile-ID | Beschreibung | Basiseinheit | Fehlerwort |
|---|---|---|---|
| 0 | Ungültiges Profil | - | 0000 h |
| 1 | Bit Information, keine Skalierung | - | 0000 h |
| 2 | ELR-Status<br>Bit 15..8: Status der digitalen Eingänge<br>Bit 7: MSG : Meldung : Sammel-Meldung<br>Bit 6 : IND : Fehler: Sammel-Fehlermeldung | - | 0000 h |

(fortgesetzt)

| Profile-ID | Beschreibung | Basiseinheit | Fehlerwort |
|---|---|---|---|
|  | Bit 5..3 :reserviert<br>Bit 2 : Rückmeldung : Rechtslauf<br>Bit 1 : Rückmeldung : Stop<br>Bit 0 : Rückmeldung : Linkslauf |  |  |
| 2..F | Reserviert | - | 0000 h |
| 10 h | Strom, Skalierung in den definierten Grenzen | A | 8040 h |
| 11 h | Spannung, Skalierung in den definierten Grenzen | V | 8040 h |
| 12 h | Widerstand, Skalierung in den definierten Grenzen | Ω | 8040 h |
| 13 h | Frequenz, Skalierung in den definierten Grenzen | Hz | 8040 h |
| 14 h | Temperatur, Skalierung in den definierten Grenzen | °C | 8040 h |
| 15 h | Temperatur, Skalierung in den definierten Grenzen | °F | 8040 h |
| 16 h | Temperatur, Skalierung in den definierten Grenzen | °k | 8040 h |
| 17 h | Wirkleistung, Skalierung in den definierten Grenzen | W | 8040 h |
| 18 h | Scheinleistung, Skalierung in den definierten Grenzen | VA | 8040 h |
| 19 h | Blindleistung, Skalierung in den definierten Grenzen | var | 8040 h |
| 1A h | Energie, Skalierung in den definierten Grenzen | kWh | 8040 h |
| 1B h | Schaltspiele, Skalierung in den definierten Grenzen |  | 8040 h |
| 1C..2F h | Reserviert | - | 8040 h |

Neben dem Fehlercode 8040h, der vom Master generiert wird, sind zweckmäßigerweise noch weitere Fehlercodes definiert, die sich aber in der Regel auf den Status des PDC's beziehen und nicht auf den Zustand des gesamten Feldgerätes. Applikationsbedingte Diagnoseinformationen werden somit durch den azyklischen Dienst "Diagnose-Zugriff" in der Station verteilt, wobei die nachfolgende Tabelle beispielhaft einige Fehlercodes und entsprechenden Fehlerbeschreibungen darstellt.

| PDC | Fehler. |
|---|---|
| 8001 h | Mess-, Darstellungsbereich verlassen (Overrange) |
| 8002 h | Drahtbruch, Netzfehler |
| 8004 h | kein gültiger Messwert verfügbar (Messwert ungültig) |
| 8010 h | weitere Fehlerinformation vorhanden |
| 8020 h | PDC nicht aktiviert |
| 8040 h | Moduldefekt bzw. nicht betriebsbereit |
| 8080 h | Mess-, Darstellungsbereich verlassen (Underrange) |

Das folgende Beispiel soll das Skalieren und die Zuordnung der PDC's-Code verdeutlichen.

| +/- 20mA<br>SL: -0.0261674<br>SH : 0.021674<br>[mA] | +/- 10V<br>SL : -10,837<br>SH : 10,837<br>[V] | +/- 3000 W<br>SL : -32512<br>SH : 32512<br>[W] | PDC-Datum<br><br>[hex] |
|---|---|---|---|
| >+21,6796 | >+10,837 | >+32512 | 8001 Overrange |
| +21,6746 | +10,837 | +32512 | 7F00 (32512) |

(fortgesetzt)

| +/- 20mA<br>SL: -0.0261674<br>SH : 0.021674<br>[mA] | +/- 10V<br>SL : -10,837<br>SH : 10,837<br>[V] | +/- 3000 W<br>SL : -32512<br>SH : 32512<br>[W] | PDC-Datum<br><br>[hex] |
|---|---|---|---|
| +20,0000 | +10,000 | +30,000 | 7530 (30000) |
| +0,666667 μ | +333,33 μ | +1 | 0001 (1) |
| 0 | 0 | 0 | 00000 |
| -6,666667 μ | -333,33 μ | -1 | FFFF (-1) |
| -20 | -10 | -30000 | 8AD0 (-30000) |
| -21,6746 | -10,837 | -32512 | 8100 (-32512) |
| <-21,6746 | <-10,837 | <-32512 | 8080 Underrange |

Die Auswertung von Diagnosedaten erfolgt beim erfindungsgemäßen Übertragungssystem beziehungsweise gemäß erfindungsgemäßem Verfahren bevorzugt per Polling, das heißt per Sendeaufruf. Immer dann, wenn ein freier Zeitschlitz zur Verfügung steht, führt der dem Übertragungssystem zugeordnete Master selbständig Diagnose-Zyklen durch. Teilnehmer, die als Produzenten definiert sind, werden durch den Diagnosezugriff überwacht. Alle anderen werden der Reihe nach aufgerufen.

Nach einem Reset senden alle PDC's mit einem Profil gleicher oder größer einer Profilnummer von beispielsweise 10h den Fehlercode 8020h, sowohl in den Diagnose- als auch in den Prozessdaten. Erst nachdem die Konfigurationsdaten des Teilnehmers durch den Master überprüft und bestätigt wurden, werden seine PDC's aktiviert.

Die grundsätzliche Funktionsweise des erfindungsgemäß einbettbaren Diagnosezugriffs in das zyklische Übertragungsprotokollmuster ist mit dem vorbeschriebenen PD-Read-Zugriff vergleichbar. Ein wesentlicher Unterschied besteht jedoch darin, dass statt der Prozessdaten Statusinformationen übertragen werden. Ein Telegrammrahmen während eines Diagnosezugriffs ist beispielhaft in Fig. 5 dargestellt.

Besitzt ein Teilnehmer mehrere PDC's, kann er verschiedene Ereignisse gleichzeitig melden. Steht nur ein Kanal für die Diagnose zur Verfügung, wird immer nur die höchstpriore Information aus Sicherheitsgründen übertragen.

Eine Diagnoseinformation setzt sich z.B. aus zwei Bytes zusammen. Der Statusklasse und dem Statuscode. Der Statuscode ist als Bitfeld auszuwerten, das heißt auch Mehrfachfelder sind zulässig beziehungsweise möglich. Je höher der Code der Klasse, je höher ist auch die Priorität des Ereignisses. Alle Klassen beispielsweise kleiner 80 h sind als Meldung und nicht als Fehler einzustufen. Einige beispielhafte Diagnoseinformationen sind nachfolgend aufgeführt

| Klasse | Code | Beschreibung |
|---|---|---|
| Fehler : Modul | | |
| FF h | 01 h | Eingangsstufe des Geräts defekt |
| | 02 h | Versorgungsspannung nicht OK |
| | 04 h | EEPROM : Herstellerbereich ungültig |
| | 80 h | reserviert |
| | 10 h | EEPROM : Konfiguration ungültig |
| | 20 h | Ausgangsstufe des Geräts defekt. |
| | 40 h | Moduldefekt bzw. nicht betriebsbereit |
| | 80 h | reserviert |
| Fehler : ELR-MM Eingang, Ausgang | | |
| 98 h | 01 h | L1 fehlerhaft |
| | 02 h | L2 fehlerhaft |
| | 04 h | L3 fehlerhaft |

(fortgesetzt)

| Klasse | Code | Beschreibung |
|---|---|---|
|  | 08 h | Netz-Fehler |
|  | 10 h | T1 unterbrochen (kein Stromfluss) |
|  | 20 h | T2 unterbrochen (kein Stromfluss) |
|  | 40 h | T3 unterbrochen (kein Stromfluss) |
|  | 80 h | "Offene Last" |
| Fehler : ELR-MM | | |
| 97 h | 01 h | Obere Meldeschwelle links |
|  | 02 h | Untere Meldeschwelle links |
|  | 04 h | Obere Meldeschwelle rechts |
|  | 08 h | Untere Meldeschwelle rechts |
|  | 10 h | Thermistor-Übertemperatur |
|  | 20 h | Links- und Rechtslauf |
|  | 40 h | Schaltspielzähler überschritten |
|  | 80 h | Stromüberwachung |
| Fehler : MCR (Messen, Steuern, Regeln) | | |
| 97 h | 01 h | Kaltstelle |
|  | 02 h | reserviert |
|  | 04 h | reserviert |
|  | 08 h | reserviert |
|  | 10 h | reserviert |
|  | 20 h | reserviert |
|  | 40 h | reserviert |
|  | 80 h | reserviert |
| PDCs Channel | | |
| 80 h | 01 h | Mess-,Darstellungsbereich verlassen (Overrange) |
|  | 02 h | Drahtbruch, Netzfehler |
|  | 04 h | kein gültiger Messwert verfügbar (Messwert ungültig) |
|  | 08 h | reserviert |
|  | 10 h | weitere Fehlerinformation vorhanden |
|  | 20 h | PDC nicht aktiviert |
|  | 40 h | Moduldefekt bzw. nicht betriebsbereit |
|  | 80 h | Mess-, Darstellungsbereich verlassen (Underrange) |
|  |  |  |
| Meldungen : ELR-MM | | |
| 0F h | 01 h | Obere Meldeschwelle links |
|  | 02 h | Untere Meldeschwelle links |
|  | 04 h | Obere Meldeschwelle rechts |
|  | 08 h | Untere Meldeschwelle rechts |

(fortgesetzt)

| Klasse | Code | Beschreibung |
|---|---|---|
| | 10 h | Thermistor-Übertemperatur |
| | 20 h | Themistor-Kurzschluss |
| | 40 h | Schaltspielzähler überschritten |
| | 80 h | Stromüberwachung |
| Meldungen : ELR-MM | | |
| 0E h | 01 h | Leistungs-Endschalter links |
| | 02 h | Leistungs-Endschalter links |
| | 04 h | Endschalter links |
| | 08 h | Endschalter links |
| | 10 h | Reserviert |
| | 20 h | reserviert |
| | 40 h | reserviert |
| | 80 h | HVO-Betrieb aktiviert |

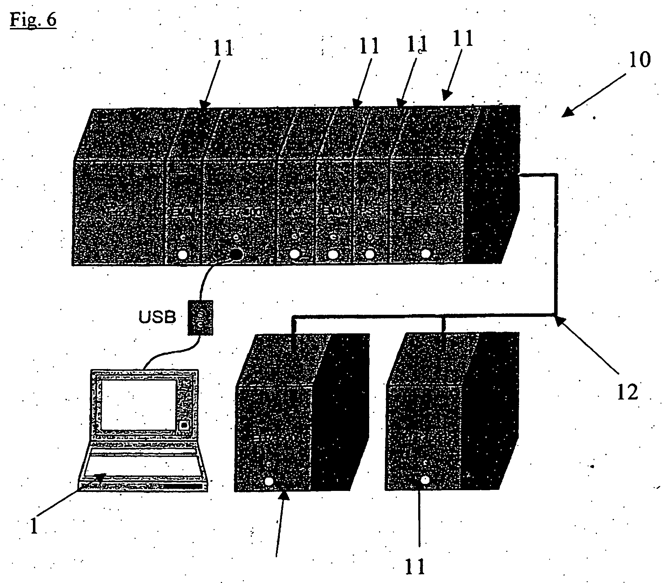

Fig. 6 zeigt einen möglichen Topolgieaufbau des erfindungsgemäßen Übertragungssystems. Eine Mastereinheit 1, in vorliegendem Fall ein Notebook, ist gemäß Fig. 1 über eine USB-Schnittstelle mit einer Feldstation 10, welche eine Vielzahl von Feldgeräten 11 umfasst, verbunden. Die physikalische Verbindung der Feldgeräte 11 beziehungsweise Slaves in der Feldstation 10 kann sowohl über einen integrierten Bus, beispielsweise über einen Rückwandbus als auch über ein separates Kabel 12 erfolgen.

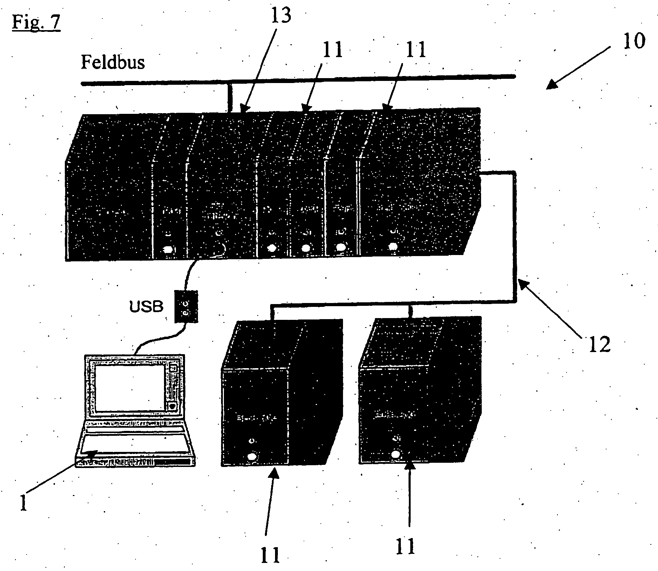

Neben der in Fig. 6 dargestellten Topologie lässt sich das erfindungsgemäße Übertragungssystem beispielsweise auch dazu nutzen, um, wie bei Fig. 7 skizziert, die Feldstation in eine Feldbusumgebung zu integrieren. Das erfindungsgemäße Übertragungssystem ist hierbei beispielsweise über ein Gateway 13 mit einem Feldbus, beispielsweise einem Profibus gekoppelt, wobei auch andere Feldbussysteme, beispielsweise Interbus, CAN, Device Net, Ethernet oder auch Wireless-Lösungen mit dem erfindungsgemäßen Übertragungssystem koppelbar sind. Die Abbildung der PDCs des erfindungsgemäßen Übertragungssystems erfolgt 1:1 in denen des Zielsystems, also des Feldbussystems, wobei die Übertragung von azyklischen Daten, beispielsweise Parameter, Kennlinien und Messdaten genau so abhängig vom Zielsystem ist, wie die Integration der Bediensoftware.

Basierend auf einem Profibus-System beispielsweise, werden azyklische Daten per DPVI-Dienste übertragen. Die Konfiguration der einzelnen Feldgeräte kann sowohl über den Profibus per DTM (Device Type Management), also einem Leitsystem mit einem Master der Klasse 2 erfolgen, als auch lokal an der dargestellten Feldstation über das als Master 1 des Übertragungssystems eingesetzte Notebook erfolgen. Die lokale Konfiguration sollte hierbei immer der Ausweg sein, wenn das Zielsystem keine herstellerübergreifende Parametrierung zulässt beziehungsweise der Entwicklungsaufwand dafür zu hoch ist, wie beispielsweise bei Interbus, CAN, Device Net.

Durch das Anstecken des lokalen Masters 1 des erfindungsgemäßen Übertragungssystems an das Gateway 13 der Feldstation 11, wird dem Gateway 13 mitgeteilt, dass ein Master höherer Priorität zur Etablierung des erfindungsgemäßen Übertragungssystems die Kontrolle über die Feldstation 10 übernimmt. Das Gateway 13 beendet daraufhin alle noch ausstehenden, azyklischen Kommandos und meldet anschließend die Unverfügbarkeit der gesamten Station zu einer dem Feldbussystem überlagerten Steuerung (Master der Klasse 1) oder Mastern der Klasse 2. Diese haben daraufhin beispielsweise eine Sekunde Zeit, die Station in den sicheren Zustand zu überführen. Nach Ablauf dieser Zeit wird der in der Station integrierte Buskoppler inaktiv und der Master 1 des erfindungsgemäßen Übertragungssystems übernimmt die lokale Kontrolle über die Station, bevorzugt nach einer Busruhezeit von beispielsweise 500 ms. Dadurch, dass der Master 1 des erfindungsgemäßen Übertragungssystems weiterhin von Zeit zu Zeit einen zyklischen Datenaustausch zum Lesen von Prozesseingangsdaten anstößt, wobei die Zeit kleiner als die Bus-Reset-Zeit von beispielsweise 2 Sekunden gewählt werden sollte, verharren die einzelnen Feldgeräte in sicherem Zustand. Das Gateway 13 liest diese Daten ebenfalls mit und aktualisiert erneut seine Feldbus-seitigen Prozessausgangsdaten.

Erkennt das Gateway 13, dass die Verbindung zum Master 1 des erfindungsgemäßen Übertragungssystems getrennt wurde, startet es automatisch den zyklischen Datenaustausch zum Lesen der Prozessdaten. Ist ein kompletter Zyklus beendet, werden die Feldbus-seitigen Prozessdaten erneut aktualisiert und die Verfügbarkeit der Station zur überlagerten Steuerung signalisiert.

Die Erfindung vereint somit die Hot-Plug-Fähigkeit und situationsabhängige Übertragung von zyklischen Prozessdaten, azyklischen Daten einschließlich Diagnosedaten mit den Vorteilen eines geringen Protokolloverheads und der synchronen Übernahme und Übergabe von Prozessdaten an alle Teilnehmer. Die Protokolleffizienz führt dazu, dass die Bruttodatenrate auf dem Übertragungsmedium reduziert wird, so dass die Protokollabarbeitung durch keinen speziellen Protokollchip mehr erfolgen muss, sondern durch einen bereits im Teilnehmer vorhandenen Micro-Controller realisiert werden kann. Der Hardware-Aufwand für die Busankopplung entsteht somit nur noch durch die Busphysik, also insbesondere den Leitungstreiber. Weiterer Nebeneffekt der erfindungsgemäß geringen Taktfrequenz ist eine hohe Störfestigkeit und geringe Störaussendung sowie der Verzicht auf eine zusätzliche externe Terminierung. Zwar ist die Vergabe einer Adresse für jedes Gerät weiterhin notwendig, jedoch kann das fehlereinträchtige Einstellen der DIP- oder. Codierschalter durch spezielle Mechanismen, die nicht Gegenstand der Erfindung sind, eliminiert werden.

Zusammenfassend ermöglicht die Erfindung somit den Datenaustausch mit mehreren Teilnehmern innerhalb eines Nachrichtenteils, basierend auf vorstehender Beschreibung insbesondere innerhalb eines PD-Read-Zügriffs. Hierdurch begründet sich die hohe Effizienz des Protokolls und die Synchronisierung bei der Datenübernahme/-übergabe. Das bevorzugte Mitlesen dieser Daten durch alle Teilnehmer führt zu einer weiteren Steigerung der Effizienz, da hierdurch die PDC's nur einmal auf den Bus übertragen werden müssen und außerdem der Arbitrierungs-Overhead für ein Multimaster-System entfällt.

Darüber hinaus ermöglicht die Erfindung das Verwerfen von redundanten Informationen, insbesondere im PD-Write-Zugriff und das Auffüllen des entsprechenden Zeitschlitzes mit azyklischen Daten einschließlich Diagnosedaten, ohne dass die Echtzeitfähigkeit bei der Übertragung der PDC's verletzt wird aufgrund der Verzögerung der gegebenenfalls erforderten Antwort beim azyklischen Datenaustausch.

**Patentansprüche**

1.   Verfahren zur Übertragung von zyklischen und azyklischen Daten über einen Übertragungskanal zwischen wenigstens zwei an den Übertragungskanal angeschalteten Teilnehmereinheiten, wobei eine protokollspezifische zyklische Datenübertragung, mit einer gleichbleibenden äußeren Telegrammstruktur, wenigstens zwischen einer als Master fungierenden Teilnehmereinheit und wenigstens einer als Slave fungierenden Teilnehmereinheit durchgeführt wird und das **dadurch gekennzeichnet ist, dass** die während eines bevorstehenden Übartragungszyklus zyklisch zu übertragenden Daten gegenüber entsprechenden Daten eines vorhergehenden Zyklus auf Vorliegen eines neuen Informationsgehalts überprüft werden und, dass bei Erkennen von zyklisch zu übertragenden Daten ohne neuen Informationsgehalt azyklische Daten anstelle dieser zyklisch zu übertragenden Daten in den für diese zyklisch zu übertragenden Daten vorgesehenen Datenbereich in der Telegrammstruktur eingefügt werden.

2.   Verfahren nach vorstehendem Anspruch, ferner **dadurch gekennzeichnet, dass** innerhalb jedes Übertragungszyklus während jeweils eines ersten Datenzyklus Prozesseingangsdaten von der Mastereinheit aus Slaveeinheiten ausgelesen werden und während eines jeweils darauffolgenden zweiten Datenzyklus Prozessausgangsdaten oder die azyklischen Daten übertragen werden.

3.   Verfahren nach einem der vorstehendes Ansprüche, ferner **dadurch gekennzeichnet, dass** azyklische Daten zur Übertragung von der Mastereinheit zu wenigstens einer Slaveeinheit und/oder von wenigstens einer Slaveeinheit zur Mastereinheit eingefügt werden.

4.   Verfahren nach einem der vorstehendes Ansprüche, ferner **dadurch gekennzeichnet, dass** zyklische Daten zur Übertragung zwischen einzelnen Slaveeinheiten, von Slaveeinheiten zur Mastereinheit und/oder von der Mastereinheit zu Slaveeinheiten eingefügt werden.

5.   Verfahren nach einem der vorstehendes Ansprüche, ferner **dadurch gekennzeichnet, dass** alle Teilnehmereinheiten während eines Datenzyklus übertragende Informationen mitlesen.

6.   Verfahren nach einem der vorstehendes Ansprüche, ferner **dadurch gekennzeichnet, dass** die Teilnehmereinheiten über jeweils empfangene oder mitgelesene Daten einen CRC bilden und diesen mit einem an den empfangenen oder mitgelesenen Daten angehängten CRC vergleichen.

7.   Verfahren nach vorstehendem Anspruch, dass bei Erkennen auf einen Fehler eine Fehlermeldung rückübertragen wird.

8.   Verfahren nach einem der vorstehendes Ansprüche, ferner **dadurch gekennzeichnet, dass** jeder Datenzyklus mit der Übertragung einer Adresse gefolgt von einem Funktionscode eingeleitet wird
und/oder
dass als azyklische Daten Anfragedaten, Antwortdaten oder Diagnosedaten, übertragen werden.

9. Verfahren nach einem der vorstehendes Ansprüche, ferner **dadurch gekennzeichnet, dass** ein jeweils bestimmter Zeitpunkt zu dem ein oder mehrere Slaveteilnehmer azyklische Daten übertragen sollen durch die Mastereinheit vorgegeben wird.

10. Verfahren nach vorstehendem Anspruch, ferner **dadurch gekennzeichnet, dass** zur Vorgabe des jeweils bestimmten Zeitpunktes während eines vorangehenden Datenzyklus, innerhalb welchem azyklische Daten übertragen werden von der Mastereinheit ein entsprechender Funktionscode mitübertragen wird.

11. Verfahren nach einem der vorstehenden Ansprüche, ferner **dadurch gekennzeichnet, dass** zumindest nach Übertragung einer vorbestimmten aufeinanderfolgenden maximalen Anzahl von azyklische Daten umfassenden Datenzyklen ein normaler, zyklische Daten umfassender Datenzyklus durchgeführt wird
und/oder
dass unter Ansprechen auf keinen fehlerfreien zyklischen Datenaustausch innerhalb eines vorgegebenen Zeitraums auf einen Fehler erkannt und eine vorparametrierte Fehlerbehandlung eingeleitet wird und/oder
dass während eines jeden Datenzyklus ein eine Adresse, einen Funktionscode, Nutzdaten und einen CRC umfassendes Telegramm übertragen wird
und/oder
dass zwischen zwei aufeinanderfolgenden Telegrammen eine Ruhezeit vorgesehen wird, innerhalb welcher keine Daten übertragen werden.

12. Verfahren nach einem der vorstehenden Ansprüche, ferner **dadurch gekennzeichnet, dass** eine Wiederholung von während eines Datenzyklus fehlerhaft übertragenen Daten erst in einem folgenden entsprechenden Datenzyklus durchgeführt wird
und/oder
dass bei Erkennen einer während eines Datenzyklus zur vorgesehenen Datenübertragung nicht zur Verfügung stehenden Slaveeinheit, durch die Mastereinheit ein Platzhalter in das entsprechende, der Slaveeinheit zugewiesene Zeitfenster eingebettet wird.

13. Verfahren nach einem der vorstehenden Ansprüche, ferner **dadurch gekennzeichnet, dass** während eines Datenzyklus zur Auswertung zu übertragene Diagnosedaten durch einen Sendeaufruf der Mastereinheit eingeleitet wird.

14. Verfahren nach vorstehendem Anspruch, ferner **dadurch gekennzeichnet, dass** während eines Diagnose-Zyklus höher priorisierte Information vorrangig übertragen wird.

15. Übertragungssystem zur Durchführung des Verfahrens nach einem der vorstehenden Ansprüche umfassend wenigstens eine als Master (1) fungierende Teilnehmereinheit und wenigstens eine als Slave fungierende und über eine Datenleitung mit dem Master verbundene Teilnehmereinheit (11), wobei die Datenleitung zum Senden und Empfangen von Daten vorgesehen ist, die auf einem anwendungsspezifischen Protokoll basierend in zyklischen Zeitabständen zwischen dem Master und dem wenigstens einen Slave und zwischen dem wenigstens einen Slave und dem Master mit einer gleichbleibenden äußeren Telegrammstruktur zu übertragen sind, **dadurch gekennzeichnet, dass** der Master (1) eine zugeordnete Prüfinstanz zur Überprüfung der für eine bevorstehende zyklische Übertragung vorgesehenen Daten auf Vorliegen eines neuen Informationsgehalts gegenüber in einer Speichereinheit abgelegten, während einer vorangegangenen zyklischen Übertragung bereits zyklisch übertragener Daten besitzt sowie eine mit der Prüfinstanz gekoppelte Entscheidungsinstanz zum Entscheiden, ob zyklische Daten ohne neuen Informationsgehalt vorliegen und wenn ja, welche azyklischen Daten in den für diese zyklisch zu übertragenden Daten vorgesehenen Datenbereich, in welchem eigentlich nur Daten ohne neuen Informationsgehalt übertragen werden würden, in der Telegrammstruktur einzufügen sind.

16. Übertragungssystem nach vorstehendem Anspruch 15, wobei eine Vielzahl von Slaves (11) eine Teilnehmerstation (10) bilden, mit welcher der Master (1) über eine gemeinsame Datenleitung zum Senden und Empfangen von Daten verbunden ist.

**Claims**

1. Method for the transmission of cyclic and acyclic data by means of a transmission channel between at least two user devices connected to the transmission channel, with a protocol-specific cyclic data transmission utilizing a constant external structure of telegram and being carried out at least between one user device functioning as a master and at least one user device functioning as a slave, and which is **characterized in that**, during an impending transmission cycle, the data to be cyclical transmitted is checked against corresponding data of a preceding cycle for the existence of a new information content and **in that** upon detection of data to be cyclical transmitted without new information content is provided, acyclic data is inserted in the structure of telegram in lieu of said data to be cyclical transmitted in the data field provided for said data to be cyclical transmitted.

2. Method according to the preceding claim, further **characterized in that** within each transmission cycle, process input data is read out by the master device from slave devices during a respective first data cycle, and during a respective second data cycle following thereupon, process output data or the acyclic data is transmitted.

3. Method according to one of the preceding claims, further **characterized in that** acyclic data are inserted for transmission from the master device to at least one slave device and/or from at least one slave device to the master device.

4. Method according to one of the preceding claims, further **characterized in that** cyclic data is inserted for transmission between individual slave devices, from slave devices to the master device and/or from the master device to slave devices.

5. Method according to one of the preceding claims, further **characterized in that** all user devices read information being transmitted at the same time during a data cycle.

6. Method according to one of the preceding claims, further **characterized in that** the user devices form a CRC by means of respective received data or data read at the same time and compare it to a CRY appended to the data received or read at the same time,

7. Method according to the preceding claim, that upon detection of an error, an error message is transmitted back,

8. Method according to one of the preceding claims, further **characterized in that** each data cycle is introduced with the transmission of an address followed by a function code
and/or
**in that** inquiry data, response data or diagnosis data is transmitted as acyclic data.

9. Method according to one of the preceding claims, further **characterized in that** the master device predetermines a respective given instant at which one or more slave users are to transmit acyclic data.

10. Method according to the preceding claim, further **characterized in that**, at the start of the respective given instant during a preceding data cycle within which acyclic data is transmitted by the master device, a corresponding function code is transmitted at the same time.

11. Method according to one of the preceding claims, further **characterized in that** a normal data cycle comprising cyclic data is carried out at least after transmission of a predetermined maximum number of consecutive data cycles comprising acyclic data
and/or
**in that** an error is recognized if no error-free cyclic data exchange is activated within a predetermined period and a pre-parameterized error process is commenced and/or
**in that** during each data cycle a telegram is transmitted comprising an address, function code, user data and a CRC
and/or
**in that** an Inter-Frame-Timeout within which no data is transmitted is provided between two consecutive telegrams.

12. Method according to one of the preceding claims, further **characterized in that** a repetition of data transmitted incorrectly during a data cycle is not carried out until a subsequent corresponding data cycle
and/or
**in that** upon detection of the unavailability of a slave device during a data cycle for the provided data transmission the master device embeds a place holder in the corresponding time window assigned to the slave device.

**13.** Method according to one of the preceding claims, further **characterized in that** during a data cycle, diagnosis data to be transmitted for evaluation is triggered by means of a transmission request of the master device.

**14.** Method according to the preceding claim, further **characterized in that** during a diagnosis cycle, higher-priority information is transmitted in a preferential manner.

**15.** Transmission system for carrying out the method according to one of the preceding claims comprising at least one user device functioning as a master (1) and at least one user device (11) functioning as a slave and connected to the master by means of a data line, with the data line being provided in order to transmit and receive data, which data are to be transmitted, in an application-specific protocol based on cyclic time intervals and by utilizing a constant external structure of telegram, between the master and the at least one slave and between the at least one slave and the master, **characterized in that** the master (1) possessing a dedicated test entity in order to check the data provided for an impending cyclic transmission with regard to the existence of a new information content by comparison to data already cyclical transmitted during a preceding cyclic transmission and filed in a memory device, and also possessing a deciding entity coupled with the test entity in order to decide whether there are cyclic data without new information content and, if yes, which acyclic data is to be inserted in the structure of telegram in the data field provided for said data to be cyclical transmitted in which only data without new information content would in actuality be transmitted.

**16.** Transmission system according to the preceding claim 15, with a multitude of slaves (11) forming a user station (10) to which the master (1) is connected by means of a common data line for the transmitting and receiving of data.

**Revendications**

**1.** Procédé permettant la transmission de données cycliques et acycliques via un canal de transmission entre au moins deux unités d'abonné raccordées au canal de transmission, une transmission de données cycliques, spécifique à un protocole et comportant une structure de télégramme extérieure constante, étant effectuée entre une unité d'abonné faisant fonction de maître et au moins une unité d'abonné faisant fonction d'esclave, et **caractérisé en ce que** les données à transmettre cycliquement pendant un cycle de transmission imminent sont examinées par rapport à des données correspondantes d'un cycle précédent afin de vérifier la présence d'un nouveau contenu d'informations, et **en ce que**, en cas de détection de données sans nouveau contenu d'informations à transmettre cycliquement, des données acycliques sont insérées, en lieu et place de ces données à transmettre cycliquement, dans la structure de télégramme dans la zone de données prévue pour ces données à transmettre cycliquement.

**2.** Procédé selon la revendication précédente, **caractérisé, en outre, en ce que**, à l'intérieur de chaque cycle de transmission, des données d'entrée de processus sont extraites des unités esclaves par l'unité maître pendant respectivement un premier cycle de données, et des données de sortie de processus ou les données acycliques sont transmises pendant un deuxième cycle respectivement de données consécutif.

**3.** Procédé selon l'une quelconque des revendications précédentes, **caractérisé, en outre, en ce que** des données acycliques, destinées à être transmises depuis l'unité maître vers au moins une unité esclave et/ou depuis au moins une unité esclave vers l'unité maître, sont insérées,

**4.** Procédé selon l'une quelconque des revendications précédentes, **caractérisé, en outre, en ce que** des données cycliques, destinées à être transmises entre différentes unités esclaves, depuis les unités esclaves vers l'unité maître et/ou depuis l'unité maître vers les unités esclaves, sont insérées.

**5.** Procédé selon l'une quelconque des revendications précédentes, **caractérisé, en outre, en ce que** toutes les unités d'abonné lisent conjointement les informations à transmettre pendant un cycle de données.

**6.** Procédé selon l'une quelconque des revendications précédentes, **caractérisé en ce que** les unités d'abonné forment un CRC relatif aux données respectivement reçues ou lues et comparent celui-ci à un CRC attaché aux données reçues ou lues.

**7.** Procédé selon la revendication précédente, **caractérisé en ce qu'**un message d'erreur est transmis en retour lorsqu'une erreur est détectée.

**8.** Procédé selon l'une quelconque des revendications précédentes, **caractérisé, en outre, en ce que** chaque cycle de données est déclenché avec la transmission d'une adresse suivie d'un code fonctionnel, et/ou **en ce que** des données d'interrogation, des données de réponse ou des données de diagnostic sont transmises en tant que données acycliques.

**9.** Procédé selon l'une quelconque des revendications précédentes, **caractérisé, en outre, en ce qu'**un instant respectivement déterminé, auquel une ou plusieurs unités esclaves doivent transmettre des données acycliques, est défini par l'unité maître.

**10.** Procédé selon l'une quelconque des revendications précédentes, **caractérisé, en outre, en ce que**, pour définir l'instant respectivement déterminé pendant un cycle de données précédent, à l'intérieur duquel des données acycliques sont transférées, un code fonctionnel correspondant est transmis en même temps par l'unité maître.

**11.** Procédé selon l'une quelconque des revendications précédentes, **caractérisé, en outre, en ce qu'**au moins après la transmission d'un nombre maximal successif prédéfini de cycles de données comportant des données acycliques, est effectué un cycle de données normal comportant des données cycliques, et/ou
**en ce qu'**en présence d'aucun échange de données sans erreur pendant une période définie, une erreur est détectée et un traitement préparamétré des erreurs est déclenché, et/ou
**en ce que**, pendant chaque cycle de données, est transmis un télégramme contenant une adresse, un code fonctionnel, des données utiles et un CRC, et/ou
**en ce qu'**entre deux télégrammes successifs, est prévu un temps de repos pendant lequel aucune donnée n'est transmise.

**12.** Procédé selon l'une quelconque des revendications précédentes, **caractérisé, en outre, en ce qu'**une répétition des données transmises avec des erreurs pendant un cycle de données est effectuée seulement dans un cycle de données suivant correspondant, et/ou
**en ce que**, lorsqu'il est détecté qu'une unité esclave n'est pas mise à disposition pendant un cycle de données pour la transmission prévue des données, l'unité maître insère un joker dans la fenêtre de temps correspondante assignée à l'unité esclave.

**13.** Procédé selon l'une quelconque des revendications précédentes, **caractérisé, en outre, en ce que**, pendant un cycle de données pour analyser les données de diagnostic à transmettre, une invitation à émettre de l'unité maître est déclenchée.

**14.** Procédé selon la revendication précédente, **caractérisé, en outre, en ce que**, pendant un cycle de diagnostic, une information à priorité plus élevée est transmise en priorité.

**15.** Système de transmission permettant la mise en oeuvre du procédé selon l'une des revendications précédentes, comportant au moins une unité d'abonné faisant fonction de maître (1) et au moins une unité d'abonné (11) faisant fonction d'esclave et reliée au maître via une ligne de transmission de données, ladite ligne de transmission de données étant prévue pour émettre et recevoir des données qui sont à transmettre sur la base d'un protocole spécifique à l'application dans des intervalles de temps cycliques entre le maître et ledit au moins un esclave et entre ledit au moins un esclave et le maître avec une structure de télégramme extérieure constante, **caractérisé en ce que** le maître (1) possède une instance de contrôle associée pour contrôler les données prévues pour une transmission cyclique imminente afin de vérifier la présence d'un nouveau contenu d'informations par rapport à des données, stockées dans une unité de mémoire, déjà transmises cycliquement pendant une transmission cyclique précédente, ainsi qu'une instance de décision, couplée à l'instance de contrôle, pour décider si des données cycliques sans nouveau contenu d'informations sont présentes et si oui, pour décider quelles données acycliques doivent être insérées dans la structure de télégramme dans la zone de données, qui est prévue pour ces données à transmettre cycliquement et dans laquelle ne serait transmises, à vrai dire, que des données sans nouveau contenu d'informations.

**16.** Système de transmission selon la revendication 15 précédente, dans lequel une pluralité d'esclaves (11) forment un poste d'abonné (10), auquel le maître (1) est relié via une ligne de transmission de données commune pour émettre et recevoir des données.

## Fig. 1

t inter-Frame-Timeout

| PD-Read | Request 1 | PD-Read | Response1 | PD-Read | PD-Write |

$t_{Buszyklus}$     $t_{Buszyklus}$     $t_{Buszyklus}*0{,}5$

## Fig. 2

| Adresse | Funktions code | Daten | CRC |
|---------|----------------|-------|-----|
| 1 Byte | 1 Byte | 1 ..64 Byte | 2 Byte |

| Error Exception | Error code |
|-----------------|------------|
| 1 Byte | 1 Byte |

## Fig. 3

Master      Master oder Slave

| Adresse | Funktions code | Daten | | | | CRC |
|---------|----------------|------|------|-----|------|-----|
| 255 | 57 h | PDC1 | PDC2 | ... | PDCn | xxxxh |

| Error Exception | Error code |
|-----------------|------------|
| D7 h | 0 |

Fig. 4

| Master | Slave1 | Master | | Slave5 | Master |
|--------|--------|--------|--|--------|--------|

| Adresse | Funktions code | Daten | | | | CRC |
|---------|----------------|-------|--|--|--|-----|
| 255 | 66 h | PDC1 | PDC2 | ... | PDCn | xxxxh |

Master oder Slave.

| Error Exception | Error code |
|-----------------|------------|
| D6 h | 0 |

Fig. 5

| Master | Slave1 | Master | | Slave5 | Master |
|--------|--------|--------|--|--------|--------|

| Adresse | Funktions code | Daten | | | | CRC |
|---------|----------------|-------|--|--|--|-----|
| 255 | 65 h | PDC1 | PDC2 | ... | PDCn | xxxxh |

Master oder Slave

| Error Exception | Error code |
|-----------------|------------|
| D5 h | 0 |

Fig. 6

Fig. 7

Feldbus

USB

**EP 1 943 570 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- DP-Ethernet: the Profibus DP protocol implemented on Ethernet. **VITTURI S.** COMPUTER COMMUNICATIONS. ELSEVIER SCIENCE PUBLISHERS BV, 20. Juni 2003, vol. 26, 1095-1104

- STANDARD FIELD BUS NETWORKS FOR INDUSTRIAL APPLICATIONS. **CENA G et al.** COMPUTER STANDARDS AND INTERFACES. ELSEVIER SEQUOIA, 15. Januar 1995, vol. 17, 155-167